# EUROPÄISCHE PATENTSCHRIFT

(11) **EP 2 683 936 B1**
(45) Veröffentlichungstag und Bekanntmachung des Hinweises auf die Patenterteilung: **24.06.2015**
(21) Anmeldenummer: 12715321.1
(22) Anmeldetag: 01.03.2012
(51) Int. Cl.: F03B 13/26, F03B 3/12

(54) **AXIALTURBINE FÜR EIN GEZEITENKRAFTWERK UND VERFAHREN FÜR DEREN MONTAGE**
AXIAL TURBINE FOR A TIDAL POWER PLANT AND METHOD FOR THE ASSEMBLY THEREOF
TURBINE AXIALE POUR UNE CENTRALE MARÉMOTRICE ET PROCÉDÉ DE MONTAGE DE CELLE-CI

(30) Priorität: 10.03.2011 DE 102011013546
(43) Veröffentlichungstag der Anmeldung: 15.01.2014
(73) Patentinhaber: Voith Patent GmbH, 89522 Heidenheim (DE)
(72) Erfinder: HENNES, Patrick, 89542 Herbrechtingen (DE); MÜLLER, Christian, 89518 Heidenheim (DE); SAUER, Alexander, 89522 Heidenheim (DE)
(74) Vertreter: Dr. Weitzel & Partner
(86) Internationale Anmeldenummer: PCT/EP2012/000882
(87) Internationale Veröffentlichungsnummer: WO 2012/119720

(56) Entgegenhaltungen:
- DE-A1- 2 019 638
- GB-A- 2 467 226
- US-A1- 2009 092 495

## Beschreibung

Die Erfindung betrifft eine Axialturbine für ein Gezeitenkraftwerk und insbesondere die Blattbefestigung für drehstarr angelenkte Rotorblätter einer Axialturbine sowie ein Verfahren für deren Montage.

Gezeitenkraftwerke in Horizontalläuferbauweise mit einer Axialturbine, deren Rotationsachse parallel zur Anströmung ausgerichtet ist, sind bekannt. Für eine möglichst robuste und wartungsarme Ausführung weisen Axialturbinen von Gezeitenkrafhnrerken drehstarr angelenkte Rotorblätter auf. Dabei wird entweder die gesamte Axialturbine zur Anpassung an eine zyklisch wechselnde Strömungsrichtung, um die Anlagenhochachse nachgeführt oder die Axialturbine weist bidirektional anströmbare Rotorblätter auf. Insbesondere für den letztgenannten Anlagentyp besteht keine Möglichkeit, beim Auftreten einer Belastungsspitze die Kennlinie der Axialturbine durch ein Herausdrehen der Rotorblätter aus der Strömung zu verändern, um die Belastung auf den Rotor zu verringern. Entsprechend müssen die Last aufnehmenden Komponenten der Axialturbine, insbesondere die Rotorblattanschlüsse, mit einer hohen Sicherheitsreserve ausgebildet sein. Werden großbauende Axialturbinen eingesetzt, um langsame Gewässerströmungen effizient zu nutzen, resultieren materialaufwendige Halterungsstrukturen für die Rotorblätter.

Zur Blattbefestigung für die Axialturbine eines Gezeitenkraftwerks schließt sich typischerweise an die profilierten Blattabschnitte der Rotorblätter ein zylindrisch geformter Halterungsabschnitt mit einem Befestigungsflansch an. Hierzu wird exemplarisch auf die GB 2467226 A, US 2008/020922 A1, US 5173023 und GB 502409 verwiesen. Für die bisher bekannten Blattbefestigungen werden auf die Wirkflächen des Befestigungsflanschs und den Schraubenkranz Kräfte und Momente aus unterschiedlichen Richtungen eingeleitet. Neben den für den Vortrieb genutzten Kräften tangential zur Nabe resultieren insbesondere aus den Schubkräften auf die profilierten Blattabschnitte Querkräfte und Biegelasten sowie Drehmomente um die Längsachse der Blattbefestigung.

Der Erfindung liegt die Aufgabe zugrunde, eine Axialturbine für ein Gezeitenkraftwerk mit einer verbesserten Blattbefestigung für an eine Nabe angelenkte und insbesondere drehstarr befestigte Rotorblätter anzugeben. Dabei soll eine konstruktive und fertigungstechnische Vereinfachung des Rotorblattanschlusses bei einer gleichzeitig sicheren Anlagenauslegung ermöglicht werden. Ferner soll die Axialturbine standardisierte Rotorblätter aufweisen, die an unterschiedliche Anlagenstandorte anpassbar sind. Des Weiteren ist ein vereinfachtes Montageverfahren für eine solche Axialturbine anzugeben.

Die Aufgabe wird durch die Merkmale der unabhängigen Ansprüche gelöst. Dabei haben die Erfinder erkannt, dass für einen Blattanschluss der Rotorblätter die auftretenden Kräfte und Momente für unterschiedliche Wirkrichtungen durch richtungsabhängig zugeordnete Sicherungskomponenten abzufangen sind. Dies eröffnet die Möglichkeit, eine Rotorblatthalterung mit einer definierten Sollbruchstelle zu versehen, der im Wesentlichen eine ausgewählte Belastungsrichtung zugeordnet ist. Ferner kann zur Adaptierung eines standardisierten Rotorblatts an einen ausgewählten Anlagenstandort eine Befestigungskomponente, die eine bestimmte Stützfunktion erfüllt, ein standortspezifisch anpassbares Element sein.

Für eine bevorzugte Ausführung der Erfindung umfasst eine Axialturbine eines Gezeitenkraftwerks eine Nabe mit wenigstens einer Rotorblattaufnahme, in die der Blattbefestigungsabschnitt eines Rotorblatts eingeführt ist. Dem Blattbefestigungsabschnitt ist eine Längsachse zugeordnet, die durch die Wirkfläche eines Befestigungsstutzens festgelegt ist. Dabei ist diese Wirkfläche die Anlagefläche des Befestigungsstutzens, die zur Abstützung gegen eine komplementär geformte Halterungsfläche an der Rotorblattaufnahme anliegt.

Diese weist eine Hüllfläche auf, die rotationssymmetrisch zur Längsachse ist. Besonders bevorzugt sind die Wirkbereiche der Halterungsfläche selbst rotationssymmetrisch.

Der Befestigungsstutzen kann in die Rotorblattaufnahme durch eine Einschubbewegung in Richtung der Längsachse eingeführt werden. Am einfachsten gelingt dies für einen konisch zulaufenden Befestigungsstutzen. Durch die wechselseitige Abstützung der Anlagefläche am Befestigungsstutzen und der komplementär geformten Halterungsfläche werden in der Montagestellung Querkräfte lateral zur Längsachse und damit die wesentlichen Biegelasten auf die Blattbefestigung abgefangen.

Als weitere Komponente umfasst der Blattbefestigungsabschnitt des Rotorblatts eine Radialfixierung, die den Blattbefestigungsabschnitt gegen eine Abzugsbewegung relativ zur Rotorblattaufnahme in Richtung der Längsachse sichert. Unter einer Abzugsbewegung wird eine Bewegung in Längsrichtung verstanden, die den Blattbefestigungsabschnitt aus der Rotorblattaufnahme herausführt. Liegt eine Radialstrahlgeometrie für die Axialturbine vor, so entspricht die Abzugsbewegung einer Verschiebung des Rotorblatts nach radial außen.

Ferner umfasst der Blattbefestigungsabschnitt ein Drehsicherungselement, das zur Abstützung eines Blattdrehmoments um die Längsachse mit einem komplementär geformten Drehstopp an der Rotorblattaufnahme in Wirkverbindung tritt. Dabei stellt die Wirkfläche des Drehsicherungselements eine von der Radialfixierung getrennt ausgebildete Komponente dar. Durch diese Anordnung am Blattbefestigungsabschnitt wird erreicht, dass die Abstützung eines Drehmoments um die Längsachse und eine Kraftwirkung parallel zur Längsachse durch unterschiedliche Komponenten der Rotorblattaufnahme abgefangen werden. Für eine alternative Ausgestaltung liegen zwei oder mehrere Drehsicherungselemente und eine entsprechende Anzahl korrespondierender Drehstopps vor. Besonders bevorzugt werden Ausgestaltungen, für die die Drehsicherungselemente so angeordnet sind, dass nur eine Einbaustellung für das Rotorblatt möglich ist, um Montagefehler ausschließen zu können.

Für eine vorteilhafte Weitergestaltung der Erfindung weist die Radialfixierung eine Sollbruchstelle auf, die beim Betrieb der Axialturbine im Wesentlichen in Richtung der Längsachse des Blattbefestigungsabschnitts belastet wird. Im einfachsten Fall sind dies Befestigungsmittel, typischerweise Schraubbolzen, auf die bei einem Schnelllauf der Axialturbine eine Zugbelastung parallel zur Längsachse wirkt. Beim Überschreiten einer vorgegebenen Lastschwelle können diese Befestigungsmittel brechen, wodurch die Radialfixierung ihre Sicherungsfunktion verliert und die Fliehkräfte das Rotorblatt in Richtung der Längsachse aus der Rotorblattaufnahme herausziehen können. Durch eine solche überlastbedingte Blattablösung reduziert sich die Gefahr einer schweren Beschädigung der Gesamtanlage. Als Folge können die Blattbefestigung und die weiteren lasttragenden Strukturen des Antriebsstrangs verschlankt werden. Ferner kann ein durch einen Überlastfall abgetrenntes Rotorblatt unter Umständen wieder geborgen und erneut montiert werden.

Für eine Weitergestaltung der Erfindung ermöglicht die separate Abstützung des Blattdrehmoments um die Längsachse die Verwendung anlagenspezifisch angepasster Bauteile. Hierzu kann entweder das Drehsicherungselement am Blattbefestigungsabschnitt oder der Drehstopp an der Blattaufnahme oder beide Bauteile an die jeweiligen Standortbedingungen angepasst werden. Ausgangspunkt ist dabei ein standardisiertes Rotorblatt, das in Abhängigkeit des am Anlagenstandort vorliegenden Lasthistogramms mit einem ausgewählten Einbauwinkel an der Nabe der Axialturbine befestigt wird. Zu diesem Zweck ist die Radialfixierung so gestaltet, dass für einen Zwischenmontageschritt eine freie Drehung in einem vorgegebenen Winkelintervall für den in die Rotorblattaufnahme eingeführten Befestigungsstutzen möglich ist. Bevorzugt wird hierfür ein Drehwinkelintervall < 10° und besonders bevorzugt < 5° um eine Normstellung.

Zur Auswahl eines bestimmten Drehwinkels erfolgt in einem nächsten Schritt die Anpassung des Drehsicherungselements und/oder des Drehstopps, wobei diese bevorzugt als separat austauschbare Bauteile ausgebildet sind. Demnach kann entweder ein standortspezifisches Drehsicherungselement und/oder ein entsprechend angepasster Drehstopp zur Fixierung eines ausgewählten Einbauwinkels verwendet werden oder es liegt eine Einstellvorrichtung vor, die wiederum bevorzugt dem Drehsicherungselement und/oder dem Drehstopp zugeordnet ist.

Am Blattbefestigungsabschnitt können weitere Kopplungselemente vorliegen, ohne dass die erfindungsgemäße, richtungsgetrennte Stützfunktion des Befestigungsstutzens, der Radialfixierung und des Drehsicherungselements aufgegeben wird. Für eine vorteilhafte Ausgestaltung ist das Drehsicherungselement an einer Anlagefläche eines Flanschteils angebracht. Damit ist eine zusätzliche Sicherung und eine Einschubbegrenzung für die Einführung des Blattbefestigungsabschnitts in die Rotorblattaufnahme gegeben. Vorteilhafterweise steht das Flanschteil in drehstarrer und bevorzugt stoffschlüssiger Verbindung zum Befestigungsstutzen, sodass beim Einführen des Blattbefestigungsabschnitts in die Rotorblattaufnahme die Anlagefläche am Flanschteil gegen eine Flanschabstützungsfläche geführt wird, die der Rotorblattaufnahme zugeordnet ist. Dabei weist die Flanschabstützungsfläche oder das Flanschteil selbst Langlöcher oder eine Öffnung in Form eines Ringsegments auf, durch die die Befestigungsmittel der Radialfixierung hindurchgreifen, sodass eine gewisse Verdrehung der Radialfixierung relativ zum Drehsicherungselement für einen Zwischenmontageschritt möglich bleibt.

Des Weiteren ist eine Ausgestaltung denkbar, für die das Drehsicherungselement am Befestigungsstutzen angeordnet ist. Möglich ist eine Anbringung des Drehsicherungselements auf der Mantelfläche des Befestigungsstutzens. Eine weitere Ausführungsalternative ergibt sich für einen als Hohlkörper ausgebildeten Befestigungsstutzen, wobei für diesen Fall eine Anbringung des Drehsicherungselements an einer Innenwandung denkbar ist. Ferner wird für eine Ausgestaltung der Befestigungsstutzen auf der Mantelfläche oder einer Innenwand mit Vor- und Rücksprüngen entsprechend einer Verzahnung versehen. Für diesen Fall muss die Anlagefläche an der Rotorblattaufnahme entsprechend komplementär ausgebildet sein. Für diese Ausführungsform ist lediglich eine Einhüllende der Anlagefläche zur Abstützung lateraler Kräfte am Befestigungsstutzen rotationssymmetrisch bezüglich der Längsachse, während die Vor- und Rücksprünge der Wirkfläche des Drehsicherungselements zur Abstützung des Blattdrehmoments um die Längsachse zugeordnet sind. Besonders bevorzugt wird jedoch eine getrennte Ausbildung des Befestigungsstutzens und des Drehsicherungselements sowie eine Ausgestaltung, für die das Drehsicherungselement am Blattbefestigungsabschnitt nur in einer bestimmten Winkelstellung mit dem zugeordneten Drehstopp an der Rotorblattaufnahme fluchtet, sodass eine fehlerfreie Montage der Rotorblätter sichergestellt ist.

Des Weiteren umfasst ein Verfahren zur Montage einer erfindungsgemäßen Axialturbine die Einführung des Befestigungsstutzens in die Rotorblattaufnahme und eine Drehung des Blattbefestigungsabschnitts um dessen Längsachse, bis das Drehsicherungselement mit dem komplementär geformten Drehstopp an der Rotorblattaufnahme in Wirkverbindung treten kann. Dabei liegt am Endpunkt der Bewegung des Befestigungsstutzens in Richtung der Längsachse die vorzugsweise rotationssymmetrisch ausgebildete Anlagefläche des Befestigungsstutzens an einer komplementär geformten Halterungsfläche der Rotorblattaufnahme an. In einem nachfolgenden Schritt kann die Radialfixierung montiert werden, die den Rotorblattbefestigungsabschnitt gegen eine Abzugsbewegung relativ zur Rotorblattaufnahme in Richtung der Längsachse sichert. Dabei stützt eine Wirkfläche des Drehsicherungselements im montierten Zustand das Blattdrehmoment um die Längsachse ab. Wenigstens diese Wirkfläche bildet eine von der Radialfixierung getrennte Komponente. Dies ermöglicht in einem weitergehenden Verfahrensschritt einen separaten Austausch oder eine Einstellung des Drehsicherungselements und/oder des hierzu komplementären Elements, den Drehstopp, an der Rotorblattaufnahme. Damit kann ein standardisiertes Rotorblatts verwendet werden, dessen Einbauwinkel anlagenspezifisch angepasst wird.

Nachfolgend wird die Erfindung anhand bevorzugter Ausführungsbeispiele in Verbindung mit Figuren erläutert, die im Einzelnen Folgendes darstellen:
- Figur 1: zeigt in perspektivischer Ansicht ein Rotorblatt mit einem erfindungsgemäß gestalteten Blattbefestigungsabschnitt.
- Figur 2: zeigt in perspektivischer Ansicht eine erfindungsgemäß gestaltete Rotorblattaufnahme an einer Nabe einer Axialturbine.
- Figur 3: zeigt ein weiteres Ausgestaltungsbeispiel für ein Rotorblatt mit einem erfindungsgemäßen Blattbefestigungsabschnitt.
- Figur 4: zeigt eine Ausführungsalternative für eine erfindungsgemäße Rotorblattaufnahme an der Nabe in perspektivischer Darstellung.
- Figur 5: zeigt ein weiteres Ausführungsbeispiel für eine erfindungsgemäße Rotorblattaufnahme in einer zu Figur 4 entsprechenden Darstellung.
- Figur 6: zeigt die Gesamtansicht einer Axialturbine in perspektivischer Darstellung.
- Figur 7: zeigt eine Draufsicht auf ein Rotorblatt aus Figur 6 in Richtung der Längsachse des Blattbefestigungsabschnitts.

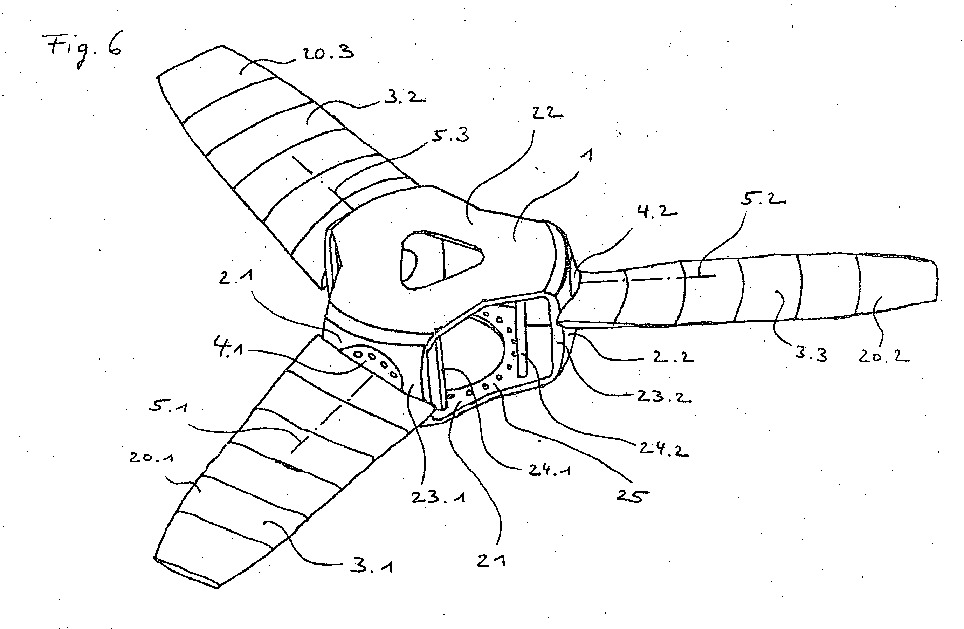

Figur 6 zeigt in schematischer Vereinfachung eine perspektivische Ansicht einer Axialturbine für ein Gezeitenkraftwerk. Die Ausführungsform weist drei Rotorblätter 3.1, 3.2, 3.3 auf, die drehstarr an einer Nabe 1 befestigt sind. Die Nabe ist bevorzugt als durchbrochener, kastenförmiger Körper aufgebaut, der mit dem wellenseitigen Nabenteil 21 und dem haubenseitigen Nabenteil 22 zwei bezüglich der nicht dargestellten Antriebswelle der Axialturbine axial beabstandete, parallele Flächenelemente aufweist. Diese stehen im Bereich der Rotorblattaufnahme 2.1, 2.2 mittels eines ersten Verbindungsstegs 23.1, 23.2 und eines zweiten Verbindungsstegs 24.1, 24.2 in Verbindung. Auch eine einteilige Ausführung der Nabe 1, beispielsweise als Gussteil, ist denkbar. Des Weiteren liegen an den Blattzwischenbereichen Öffnungen an der Nabe 1 vor, sodass ein Zugang zum Innenbereich der Nabe und eine leichtbauende Struktur resultiert.

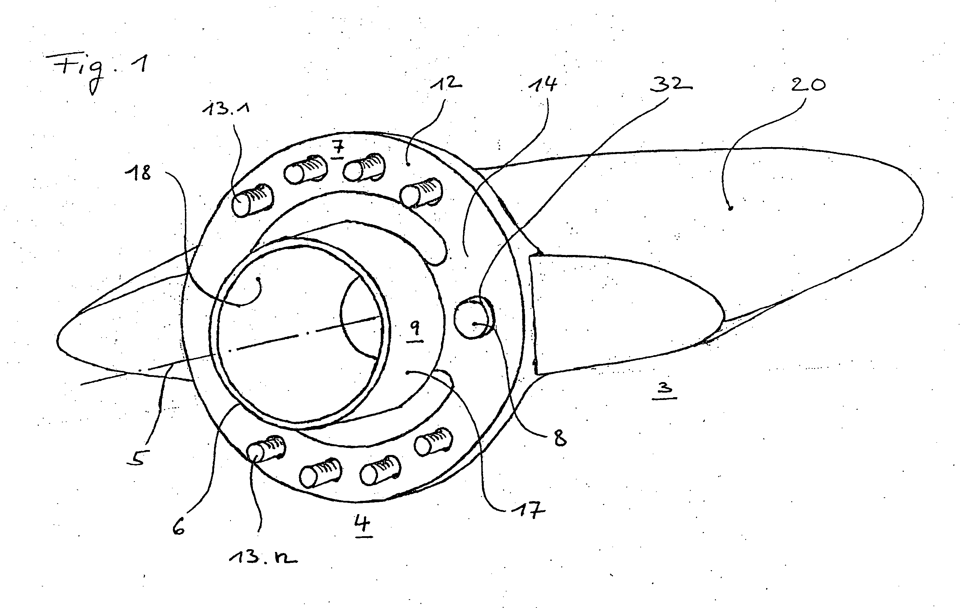

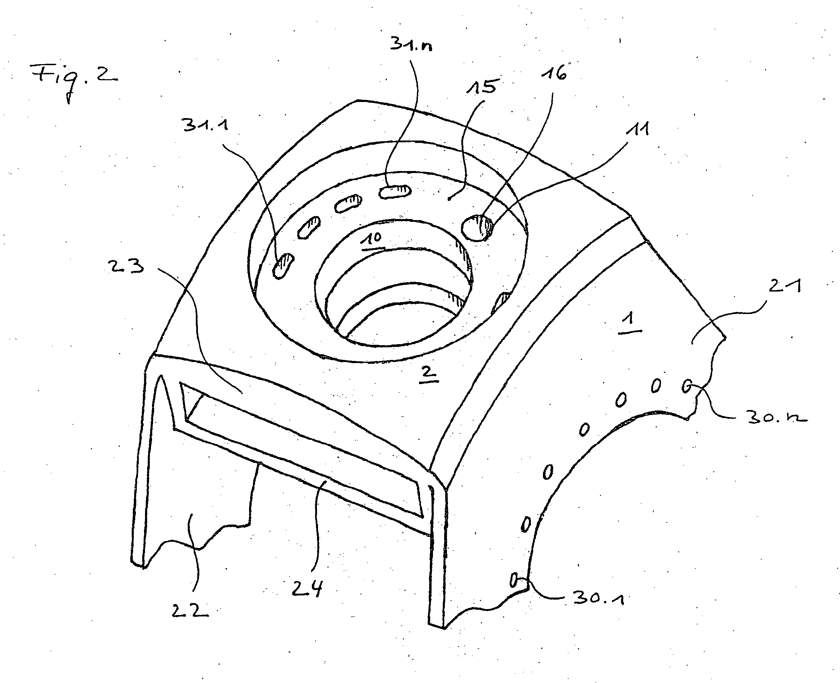

Die Rotorblätter 3.1, 3.2, 3.3 umfassen jeweils einen profilierten Blattabschnitt 20.1, 20.2, 20.3 und einen Blattbefestigungsabschnitt 4.1, 4.2, 4.3. Dabei sind den Blattbefestigungsabschnitten 4.1, 4.2, 4.3 Längsachsen 5.1, 5.2, 5.3 zugeordnet, deren Festlegung sich aus Figur 1 ergibt. Diese zeigt schematisch vereinfacht die perspektivische Ansicht eines Blattbefestigungsabschnitts 4 für ein Rotorblatt 3, der einen Befestigungsstutzen 6, eine Radialfixierung 7 und ein Drehsicherungselement 8 umfasst. Dabei ist der Blattbefestigungsstutzen 6 als ein hohles rotationssymmetrisches Bauteil ausgebildet. Dieses weist eine Mantelfläche 17 und eine Innenwandung 18 auf, wobei für die dargestellte Ausgestaltung die Mantelfläche 17 als Anlagefläche 9 gewählt ist, die zur Abstützung an einer zugeordneten komplementär geformten Halterungsfläche 10 der Rotorblattaufnahme 2 dient, die in Figur 2 gezeigt ist. Aus der Anlagefläche 9 des Befestigungsstutzens 6 folgt die Festlegung der Längsachse 5 des Blattbefestigungsabschnitts 4, wobei die Längsachse 5 jene Achse bildet, zu der die Anlagefläche 9 rotationssymmetrisch ist.

Der Befestigungsstutzen 6, der vorzugsweise mit der inneren Tragstruktur des profilierten Blattabschnitts 20 in Verbindung steht, wird in die kreisförmigen Öffnungen im ersten Verbindungssteg 23 und im zweiten Verbindungssteg 24 der in Figur 2 gezeigten Rotorblattaufnahme eingeführt. Beim Erreichen der Endlage liegt die Anlagefläche 9 am Befestigungsstutzen 6 an der komplementär geformten Halterungsfläche 10 an und dient zur Aufnahme von Kräften quer zur Längsachse und von Biegelasten.

Der Blattbefestigungsabschnitt 4 umfasst ferner ein stoffschlüssig mit dem Befestigungsstutzen 6 verbundenes Flanschteil 12, das eine Anlagefläche 14 umfasst, die in Montagestellung auf einer Flanschabstützungsfläche 15 an der Rotorblattaufnahme 2 aufliegt. Auf der Anlagefläche 14 ist ein zylindrisch ausgebildetes Drehsicherungselement 8 angeordnet, das für die montierte Stellung in eine komplementär angelegte Bohrung 16 in der Flanschabstützungsfläche 15 eingreift. Dabei bildet die Bohrung 16 den zum Drehsicherungselement 8 komplementär geformten Drehstopp 11 an der Rotorblattaufnahme 2. Das Drehsicherungselement 8 und der Drehstopp 11 legen lediglich eine mögliche Einbaustellung des Blattbefestigungsabschnitts 4 in der Rotorblattaufnahme 2 fest. Ferner stützt das Drehsicherungselement 8 das beim Betrieb der Axialturbine auftretende Blattdrehmoment um die Längsachse 5 ab. Entsprechend passgenau sind die Wirkfläche 32 am Drehsicherungselement 8 und die Wandung der Bohrung 16 für den Drehstopp 11 aufeinander abgestimmt. Dabei kann für das Drehsicherungselement 8 sowie den Befestigungsstutzen 6 oder für die hierzu komplementären Komponenten an der Blattaufnahme zur Vereinfachung der Einführung ein konischer Flächenverlauf vorgesehen sein.

Weitere, im Einzelnen nicht dargestellte Ausgestaltungen des Drehsicherungselements 8 und des Drehstopps 11 sind denkbar. Dabei kann insbesondere eine zapfenförmige Struktur an der Rotorblattaufnahme 2 vorliegen, die in eine Ausnehmung am Blattbefestigungsabschnitt 4 eingreift. Ferner kann mehr als ein Drehsicherungselement 8 und eine Vielzahl von korrespondierenden Drehstopps 11 vorgesehen sein.

Der letzte verbleibende Freiheitsgrad des Blattbefestigungsabschnitts 4 relativ zur Rotorblattaufnahme 2 wird durch die Radialfixierung 7 gesichert, die für die dargestellte Ausgestaltung mehrere Befestigungsmittel 13.1, ..., 13.n in Form von Schraubbolzen umfasst. Diese sind durch Bohrungen im Flanschteil 12 geführt und reichen durch als Langlöcher 31.1, 31.n ausgebildete Öffnungen an der Rotorblattaufnahme 2. Entsprechend werden die Befestigungsmittel 13.1, ..., 13.n der Radialfixierung 7 beim Betrieb der Axialturbine im Wesentlichen auf Zug belastet, wobei eine klar definierte Überlastschwelle festgelegt werden kann, oberhalb der die Befestigungsmittel 13.1, 13.n mit hoher Wahrscheinlichkeit brechen, sodass das gesamte Rotorblatt 3 von der Nabe 1 in Längsrichtung durch die Fliehkraftwirkung abgeworfen wird. Demnach bildet für die dargestellte vorteilhafte Ausgestaltung die Radialfixierung 7 eine definierte Sollbruchstelle für die Rotorblattanbindung, die von einer komplexen, undefinierten Krafteinwirkung freigehalten wird.

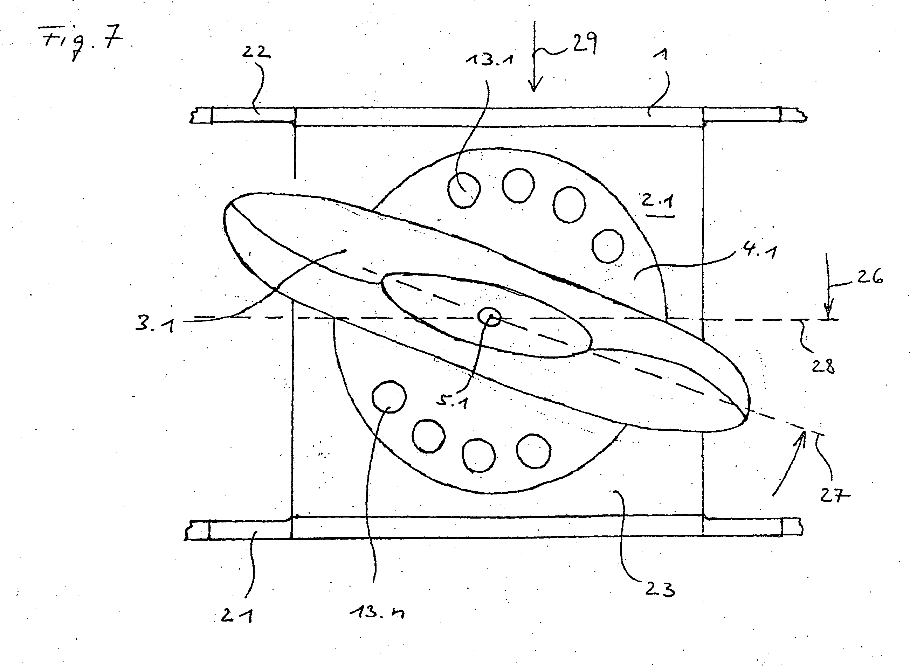

Die Funktionszuordnung für den Befestigungsstutzen 6, die Radialfixierung 7 und das Drehsicherungselement 8 ermöglicht ferner eine vereinfachte anlagenspezifische Einstellung eines Einbauwinkels für ein Rotorblatt 3.1. Hierzu wird auf Figur 7 verwiesen, die schematisch vereinfacht die Sicht auf ein Rotorblatt 3.1 mit dem zugeordneten Blattbefestigungsabschnitt 4.1 in Richtung der Längsachse 5.1 zeigt. Dargestellt ist der Montagezustand, für den der Blattbefestigungsabschnitt 4.1 in die Rotorblattaufnahme 2.1 an der Nabe 1 eingeführt ist.

Figur 7 illustriert den Einbauwinkel 26 zwischen einer Blattquerachse 27 und einer Nabenebene 28. Dabei ist die Blattquerachse 27 durch die Sehnenlinie eines ausgewählten Profilschnitts definiert. Die Nabenebene 28 wird durch die Durchstoßpunkte der Längsachsen 5.1, 5.2, 5.3 der Rotorblätter 3.1, 3.2, 3.3 bezüglich einer ausgewählten Ebene der zugeordneten Rotorblattaufnahmen 2.1, 2.2 festgelegt. Dabei verläuft die Nabenebene 28 für eine optimale Ausrichtung der Anlage senkrecht zur Anströmungsrichtung 29 der Gezeitenströmung.

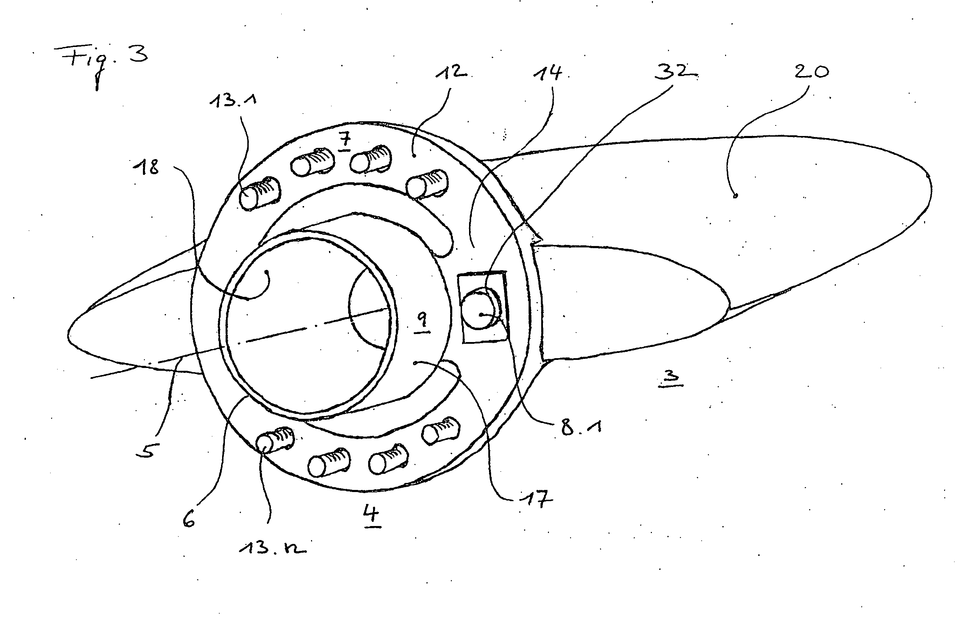

Zur Standortanpassung des Einbauwinkels 26 wird die Lage des Drehsicherungselements 8 relativ zu den weiteren Komponenten des Blattbefestigungsabschnitts 4 und damit zu den profilierten Blattabschnitten 20 eingestellt. Für eine erste in Figur 3 gezeigte Ausgestaltung ist hierzu das Drehsicherungselement 8.1 als separat austauschbares Bauteil ausgebildet, das in eine Ausnehmung der Anlagefläche 14 am Flanschteil 12 aufgenommen ist.

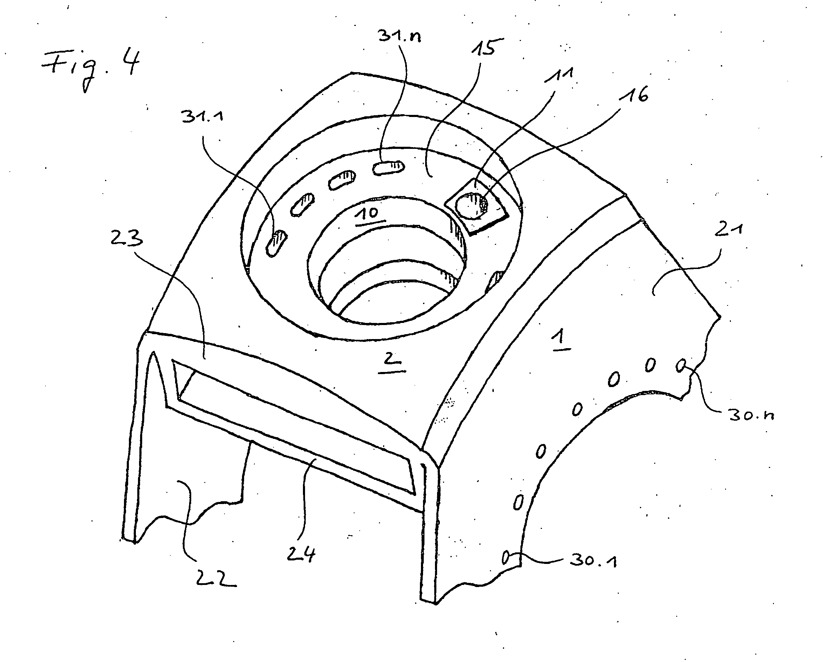

Eine Ausgestaltungsalternative ergibt sich aus Figur 4, die einen separat austauschbaren Drehstopp 11 zeigt, der in eine Ausnehmung an der Flanschabstützungsfläche 15 der Rotorblattaufnahme 2 eingepasst ist. Dabei kann die Bohrung 16 in einem vorgegebenen Winkelbereich, der durch die Abmessung des separaten Drehstopps 11 begrenzt ist, festgelegt werden. Bevorzugt werden die in den Figuren 3 und 4 gezeigten Maßnahmen kombiniert, um einen möglichst variablen Einbauwinkel 26 zu erzielen.

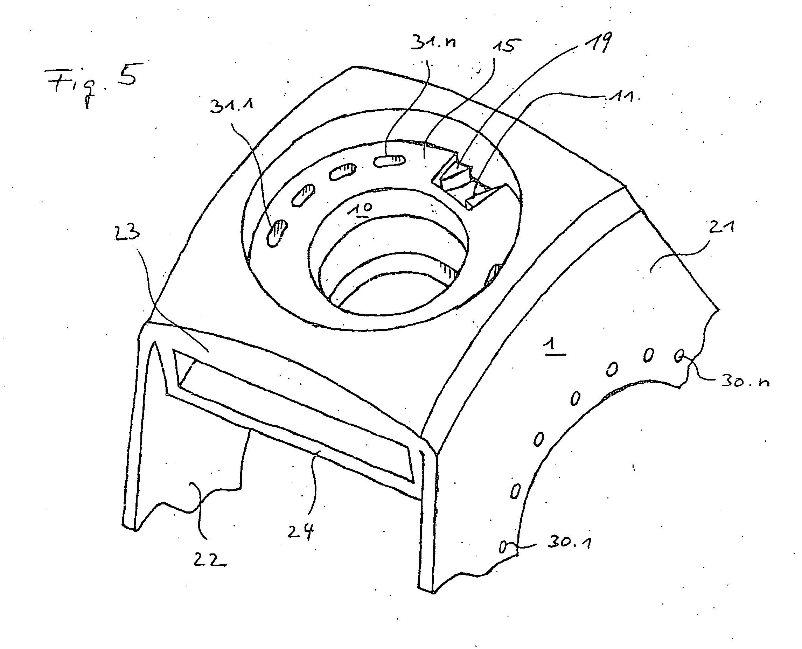

In Figur 5 ist eine Weitergestaltung der Ausführungsform zur anlagenspezifischen Anpassung gezeigt, für die eine Einstellvorrichtung 19 am Drehstopp 11 der Rotorblattaufnahme 2 vorgesehen ist. Eine korrespondierende, im Einzelnen nicht dargestellte Ausgestaltung sieht vor, das Drehsicherungselement 8.1 am Blattbefestigungsabschnitt 4 mit einer Einstellvorrichtung zu versehen. Die in Figur 5 gezeigte Einstellvorrichtung 19 weist eine paarweise Anordnung von radial zur Längsachse bewegbaren keilförmigen Komponenten auf, die die Position der Wirkfläche des Drehstopps 11 in Umfangsrichtung relativ zur Längsachse variieren. Entsprechend wird durch die Einstellvorrichtung 19 eine Anpassung des Einbauwinkels 26 des zugehörigen Rotorblatts vorgenommen.

Weitere Ausgestaltungen der Erfindung im Rahmen der nachfolgenden Schutzansprüche sind denkbar. Dabei kann die erfindungsgemäße Blattbefestigung mit einem Pitchwinkelverstellmechanismus verbunden werden, sodass die voranstehend beschriebene, drehstärre Anlenkung an einer gegenüber der Nabe 1 drehbaren Rotorblattaufnahme 2 erfolgt.

### Bezugszeichenliste

- 1: Nabe
- 2, 2.1, 2.2: Rotorblattaufnahme
- 3, 3.1, 3.2, 3.3: Rotorblatt
- 4, 4.1, 4.2: Blattbefestigungsabschnitt
- 5, 5.1, 5.2, 5.3: Längsachse
- 6: Befestigungsstutzen
- 7: Radialfixierung
- 8,8.1: Drehsicherungselement
- 9: Anlagefläche
- 10: Haltungsfläche
- 11: Drehstopp
- 12: Flanschteil
- 13.1, ..., 13.n: Befestigungsmittel
- 14: Anlagefläche
- 15: Flanschabstützungsfläche
- 16: Bohrung
- 17: Mantelfläche
- 18: Innenwandung
- 19: Einstellvorrichtung
- 20, 20.1, 20.2, 20.3: profilierter Blattabschnitt
- 21: wellenseitiges Nabenteil
- 22: haubenseitiges Nabenteil
- 23, 23.1, 23.2: erster Verbindungssteg
- 24, 24.1, 24.2: zweiter Verbindungssteg
- 25: Blattzwischenbereich
- 26: Einbauwinkel
- 27: Blattquerachse
- 28: Nabenebene
- 29: Anströmungsrichtung
- 30.1, ..., 30.n: Bohrung
- 31.1, ..., 31.n: Langloch
- 32: Wirkfläche

## Patentansprüche

1. Axialturbine für ein Gezeitenkraftwerk, umfassend
1.1 eine Nabe (1) mit wenigstens einer Rotorblattaufnahme (2, 2.1, 2.1, 2.3);
1.2 mindestens ein Rotorblatt (3, 3.1, 3.2, 3.3) mit einem Blattbefestigungsabschnitt (4), dem eine Längsachse (5, 5.1, 5.2, 5.3) zugeordnet ist und der einen Befestigungsstutzen (6), eine Radialfixierung (7) und ein Drehsicherungselement (8) umfasst;
1.3 wobei der Befestigungsstutzen (6) eine Anlagefläche (9) zur Abstützung gegen eine komplementär geformte Halterungsfläche (10) an der Rotorblattaufnahme (2, 2.1, 2.1, 2.3) umfasst, deren Einhüllende rotationssymmetrisch zur Längsachse (5, 5.1, 5.2, 5.3) ist; und
1.4 wobei die Radialfixierung (7) den Rotorblattbefestigungsabschnitt (4) gegen eine Abzugsbewegung relativ zur Rotorblattaufnahme (2, 2.1, 2.1, 2.3) in Richtung der Längsachse (5, 5.1, 5.2, 5.3) sichert;
**dadurch gekennzeichnet, dass**
1.5 das Drehsicherungselement (8) mit einem komplementär geformten Drehstopp (11) an der Rotorblattaufnahme (2, 2.1, 2.1,2.3) zur Abstützung eines Blattdrehmoments um die Längsachse (5, 5.1, 5.2, 5.3) in Wirkverbindung tritt, wobei eine Wirkfläche (32) des Drehsicherungselements (8) eine von der Radialfixierung (7) getrennt ausgebildete Komponente des Blattbefestigungsabschnitts (4) ist und die Radialfixierung (7) Befestigungsmittel (13.1, ..., 13.n) umfasst, die als Sollbruchstelle des Blattbefestigungsabschnitts (4) dienen.

2. Axialturbine nach Anspruch 1, **dadurch gekennzeichnet, dass** das Drehsicherungselement (8) und/oder der Drehstopp (11) anlagenspezifisch angepasste Bauteile sind.

3. Axialturbine nach einem der vorausgehenden Ansprüche, **dadurch gekennzeichnet, dass** das Drehsicherungselement (8) und/oder der Drehstopp (11) als separat austauschbare Bauteile ausgebildet sind.

4. Axialturbine nach einem der vorausgehenden Ansprüche, **dadurch gekennzeichnet, dass** dem Drehsicherungselement (8) und/oder dem Drehstopp (11) eine Einstellvorrichtung (19) zugeordnet ist.

5. Axialturbine nach einem der vorausgehenden Ansprüche, **dadurch gekennzeichnet, dass** der Blattbefestigungsabschnitt (4) ein Flanschteil (12) umfasst, an dem das Drehsicherungselement (8) angeordnet ist.

6. Axialturbine nach Anspruch 5, **dadurch gekennzeichnet, dass** die Radialfixierung (7) Befestigungsmittel (13.1, ..., 13.n) umfasst, die durch Langlöcher (31.1, ..., 31.n) am Flanschteil (12) und/oder an einer Flanschabstützungsfläche (15) an der Rotorblattaufnahme (2, 2.1, 2.1, 2.3) geführt sind.

7. Axialturbine nach einem der Ansprüche 5 oder 6, **dadurch gekennzeichnet, dass** der Befestigungsstutzen (6) mit dem Flanschteil (12) verbunden ist.

8. Axialturbine nach einem der vorausgehenden Ansprüche, **dadurch gekennzeichnet, dass** die Rotorblattaufnahme (2, 2.1, 2.1, 2.3) eine Flanschabstützungsfläche (15) umfasst, in die der Drehstopp (11) aufgenommen ist.

9. Verfahren zur Montage einer Axialturbine für ein Gezeitenkraftwerk, mit
9.1 einer Nabe (1), die wenigstens eine Rotorblattaufnahme (2, 2.1, 2.1, 2.3) umfasst; und
9.2 einem Rotorblatt (3, 3.1, 3.2, 3.3) mit einem Blattbefestigungsabschnitt (4), dem eine Längsachse (5, 5.1, 5.2, 5.3) zugeordnet ist und der einen Befestigungsstutzen (6), eine Radialfixierung (7) und ein Drehsicherungselement (8) umfasst;
9.3 wobei der Befestigungsstutzen (6), der eine Anlagefläche (9) umfasst, deren Hüllfläche rotationssymmetrisch zur Längsachse (5, 5.1, 5.2, 5.3) ist, in die Rotorblattaufnahme (2, 2.1, 2.1, 2.3) eingeführt und so weit um die Längsachse (5, 5.1, 5.2, 5.3) gedreht wird bis das Drehsicherungselement (8) mit einem komplementär geformten Drehstopp (11) an der Rotorblattaufnahme (2, 2.1, 2.1, 2.3) fluchtet; und
9.4 der Befestigungsstutzen (6) bis zur Anlage an eine komplementär geformte Halterungsfläche (10) an der Rotorblattaufnahme (2, 2.1, 2.1, 2.3) geführt wird, wobei das Drehsicherungselement (8) mit dem komplementär geformten Drehstopp (11) in Wirkverbindung tritt; und
9.5 eine Radialfixierung (7) angebracht wird, die den Rotorblattbefestigungsabschnitt (4) gegen eine Abzugsbewegung relativ zur Rotorblattaufnahme (2, 2.1, 2.1, 2.3) in Richtung der Längsachse (5, 5.1, 5.2,5.3) sichert;
**dadurch gekennzeichnet, dass**
9.6 eine Wirkfläche (32) des Drehsicherungselements (8), die eine von der Radialfixierung (7) getrennte Komponente des Blattbefestigungsabschnitts (4).bildet, das Blattdrehmoment um die Längsachse (5, 5.1, 5.2, 5.3) abstützt und die Radialfxierung (7) Befestigungsmittel (13.1, ..., 13.n) umfasst, die als Sollbruchstelle des Blattbefestigungsabschnitts (4) dienen..

10. Verfahren nach Anspruch 9, **dadurch gekennzeichnet, dass** das Drehsicherungselement (8) und/oder der Drehstopp (11) anlagenspezifisch angepasst werden.

## Claims

1. An axial turbine for a tidal power plant, comprising
1.1 a hub (1) with at least one rotor blade holder (2, 2.1, 2.1, 2.3);
1.2 at least one rotor blade (3, 3.1, 3.2, 3.3) with a blade fastening section (4), to which a longitudinal axis (5, 5.1, 5.2, 5.3) is allocated und which comprises a fastening stub (6), a radial fixing (7) and an anti-rotation element (8);
1.3 with the fastening stub (6) comprising a contact surface (9) for support against a complementarily shaped fixing surface (10) on the rotor blade holder (2, 2.1, 2.3) whose envelope is rotationally symmetrical to the longitudinal axis (5, 5.1, 5.2, 5.3), and
1.4 with the radial fixing (7) securing the rotor blade fastening section (4) against a withdrawal movement relative to the rotor blade holder (2, 2.1, 2.1, 2.3) in the direction of the longitudinal axis (5, 5.1, 5.2, 5.3); **characterized in that**
1.5 the anti-rotation element (8) enters into operative connection with a complementarily shaped rotational stop (11) on the rotor blade holder (2, 2.1, 2.1, 2.3) for supporting a blade torque about the longitudinal axis (5, 5.1, 5.2, 5.3), with an effective area (32) of the anti-rotation element (8) being a component of the blade fastening section (4) which is arranged separate from the radial fixing (7), and the radial fixing (7) comprises fastening means (13.1, ..., 13.n) which are used as a predetermined breaking point of the blade fastening section (4).

2. An axial turbine according to claim 1, **characterized in that** the anti-rotation element (8) and/or the rotational stop (11) are components adjusted specifically to the installation.

3. An axial turbine according to one of the preceding claims, **characterized in that** the anti-rotation element (8) and/or the rotational stop (11) are arranged as separately exchangeable components.

4. An axial turbine according to one of the preceding claims, **characterized in that** the anti-rotation element (8) and/or the rotational stop (11) are associated with an adjusting apparatus (19).

5. An axial turbine according to one of the preceding claims, **characterized in that** the blade fastening section (4) comprises a flange part (12) on which the anti-rotation element (8) is arranged.

6. An axial turbine according to claim 5, **characterized in that** the radial fixing (7) comprises fastening means (13.1, ..., 13.n) which are guided by oblong holes (31.1, ..., 31.n) on the flange part (12) and/or a flange support surface (15) on the rotor blade holder (2, 2.1, 2.1, 2.3).

7. An axial turbine according to one of the claims 5 or 6, **characterized in that** the fastening stub (6) is connected with the flange part (12).

8. An axial turbine according to one of the preceding claims, **characterized in that** the rotor blade holder (2, 2.1, 2.1, 2.3) comprises a flange support area (15) in which the rotational stop (11) is accommodated.

9. A method for mounting an axial turbine for a tidal power plant, comprising
9.1 a hub (1) which comprises at least one rotor blade holder (2, 2.1, 2.1, 2.3), and
9.2 a rotor blade (3, 3.1, 3.2, 3.3) with a blade fastening section (4) to which a longitudinal axis (5, 5.1, 5.2, 5.3) is allocated and which comprises a fastening stub (6), a radial fixing (7) and an anti-rotation element (8);
9.3 with the fastening stub (6) which comprises a contact surface (9) whose envelope is rotationally symmetrical to the longitudinal axis (5, 5.1, 5.2, 5.3) being introduced into the rotor blade holder (2, 2.1, 2.1, 2.3) and being twisted about the longitudinal axis (5, 5.1, 5.2, 5.3) to such an extent until the anti-rotation element (8) is in alignment with a complementarily shaped rotational stop (11) on the rotor blade holder (2, 2.1, 2.1, 2.3), and
9.4 the fastening stub (6) is guided up to contact with a complementarily shaped fixing surface (10) on the rotor blade holder (2, 2.1, 2.1, 2.3), with the anti-rotation element (8) entering into operative connection with the complementarily shaped rotational stop (11), and
9.5 a radial fixing (7) is attached which secures the rotor blade fastening section (4) against a withdrawal movement relative to the rotor blade holder (2, 2.1, 2.1, 2.3) in the direction of the longitudinal axis (5, 5.1, 5.2,5.3); **characterized in that**
9.6 an effective area (32) of the anti-rotation element (8) which forms a component of the blade fastening section (4) separate from the radial fixing (7) supports the blade torque about the longitudinal axis (5, 5.1, 5.2, 5.3), and the radial fixing (7) comprises fastening means (13.1, ..., 13.n) which are used as a predetermined breaking point of the blade fastening section (4).

10. A method according to claim 9, **characterized in that** the anti-rotation element (8) and the rotational stop (11) are adjusted in an installation-specific manner.

## Revendications

1. Turbine axiale pour centrale marémotrice, comprenant
1.1 un moyeu (1) avec au moins un réceptacle pour pales de rotor (2, 2.1, 2.1, 2.3) ;
1.2 au moins une pale de rotor (3, 3.1, 3.2, 3.3) avec une partie de fixation de pale (4), à laquelle est associée un axe longitudinal (5, 5.1, 5.2, 5.3) et qui contient une fixation radiale (7) et un élément de blocage en rotation (8) ;
1.3 où la tubulure de fixation (6) englobe une surface d'appui (9) pour s'appuyer contre une surface de support de forme complémentaire (10) au niveau du réceptacle pour pales de rotor (2, 2. 1, 2. 1, 2. 3), dont l'enveloppe est symétrique en rotation par rapport à l'axe longitudinal (5, 5. 1, 5.2, 5.3) ; et
1.4 où la fixation radiale (7) protège la partie de fixation des pales de rotor (4) contre tout mouvement d'extraction par rapport au réceptacle pour pales de rotor (2, 2.1, 2.1, 2.3) dans la direction de l'axe longitudinal (5, 5.1, 5.2, 5.3);
caractérisée en ce
1.5 que l'élément de blocage en rotation (8) est en liaison opérationnelle avec une butée de rotation de forme complémentaire (11) au niveau du réceptacle pour pales de rotor (2, 2.1, 2.1, 2.3) pour soutenir un couple de rotation de pales autour de l'axe longitudinal (5, 5.1, 5.2, 5.3), où une surface utile (32) de l'élément de blocage en rotation (8) est une composante de la partie de fixation des pales de rotor (4) séparément de la fixation radiale (7) et la fixation radiale (7) comprend des moyens de fixation (13.1, ..., 13.n) servant de point de rupture de consigne de la partie de fixation des pales de rotor (4).

2. Turbine axiale selon la revendication 1 **caractérisée en ce que** l'élément de blocage en rotation (8) et/ou la butée de rotation (11) sont des composants adaptés spécifiquement à l'installation.

3. Turbine axiale selon l'une quelconque des revendications précédentes, **caractérisée en ce que** l'élément de blocage en rotation (8) et/ou la butée de rotation (11) sont des composants remplaçables séparément.

4. Turbine axiale selon l'une quelconque des revendications précédentes, **caractérisée en ce qu'**un dispositif de réglage (19) est associé à l'élément de blocage en rotation (8) et/ou à la butée de rotation (11).

5. Turbine axiale selon l'une quelconque des revendications précédentes, **caractérisée en ce que** la partie de fixation de pale (4) comprend une partie bride (12), à laquelle l'élément de blocage en rotation (8) est associé.

6. Turbine axiale selon la revendication 5 **caractérisée en ce que** la fixation radiale (7) comprend des moyens de fixation (13.1, ..., 13.n) qui sont guidés à travers des trous oblongs (31. 1,..., 31.n) au niveau de la partie bride (12) et/ou d'une surface d'appui des brides (15) près du réceptacle pour pales de rotor (2, 2.1, 2.1, 2.3).

7. Turbine axiale selon l'une quelconque des revendications 5 ou 6, **caractérisée en ce que** la tubulure de fixation (6) est liée à la partie bride (12).

8. Turbine axiale selon l'une quelconque des revendications précédentes, **caractérisée en ce que** le réceptacle pour pales de rotor (2, 2.1, 2.1, 2.3) comprend une surface d'appui des brides (1) logeant la butée de rotation (11).

9. Procédé de montage d'une turbine axiale pour centrale marémotrice, avec
9.1 un moyeu (1), comprenant au moins un réceptacle pour pales de rotor (2, 2.1, 2.1, 2.3); et
9.2 une pale de rotor (3, 3.1, 3.2, 3.3) avec une partie de fixation de pale (4), à laquelle est associée un axe longitudinal (5, 5.1, 5.2, 5.3) et qui contient une tubulure de fixation (6), une fixation radiale (7) et un élément de blocage en rotation (8);
9.3 où la tubulure de fixation (6), qui contient une surface d'appui (9), dont l'enveloppe est symétrique en rotation par rapport à l'axe longitudinal (5, 5. 1, 5.2, 5.3), est guidée dans le réceptacle pour pales de rotor (2, 2.1, 2.1, 2.3) et est mis en rotation jusqu'à ce moment autour de l'axe longitudinal (5, 5.1, 5.2, 5.3) jusqu'à ce que l'élément de blocage en rotation s'aligne avec une butée de rotation (11) de forme complémentaire au niveau du réceptacle pour pales de rotor (2, 2.1, 2.1, 2.3);
9.4 la tubulure de fixation (6) est guidée jusqu'à l'installation contre une surface de support (10) de forme complémentaire au niveau du réceptacle pour pales de rotor (2, 2.1, 2.1, 2.3), où l'élément de blocage en rotation (8) est en liaison opérationnelle avec la butée de rotation (11) de forme complémentaire; et
9.5 une fixation radiale (7) est montée, qui protège la partie de fixation des pales de rotor (4) contre tout mouvement d'extraction par rapport au réceptacle pour pales de rotor (2, 2.1, 2.1, 2.3) dans la direction de l'axe longitudinal (5, 5.1, 5.2, 5.3);
caractérisée en ce
9.6 une surface utile (32) de l'élément de blocage en rotation (8), qui constitue une composante de la partie de fixation des pales de rotor (4) séparément de la fixation radiale (7), qui soutient le couple de rotation des pales autour de l'axe longitudinal (5, 5.1, 5.2, 5.3) et la fixation radiale (7) comprend des moyens de fixation (13.1, ..., 13.n) servant de point de rupture de consigne de la partie de fixation des pales de rotor (4).

10. Procédé selon la revendication 9, **caractérisé en ce que** l'élément de blocage en rotation (8) et/ou la butée de rotation (11) sont adaptés spécifiquement à l'installation.
